# EUROPEAN PATENT APPLICATION

(11) **EP 3 282 133 A1**
(43) Date of publication of application: **14.02.2018**
(21) Application number: 16776366.3
(22) Date of filing: 09.03.2016
(51) Int. Cl.: F15B 15/14, F15B 15/28, G01B 7/00

(54) **FUNCTIONAL CYLINDER BODY AND MANUFACTURING METHOD FOR SAME**

(30) Priority: 07.04.2015 JP 2015078704
(71) Applicant: Think Laboratory Co., Ltd., Kashiwa-shi Chiba 277-8525 (JP)
(72) Inventor: SHIGETA, Tatsuo, Kashiwa-shi Chiba 277-8525 (JP); SHIGETA, Kaku, Kashiwa-shi Chiba 277-8525 (JP); SUGAWARA, Shintaro, Kashiwa-shi Chiba 277-8525 (JP)
(74) Representative: Mincone, Antimo
(86) International application number: PCT/JP2016/057350
(87) International publication number: WO 2016/163197

(57) **Abstract**

Provided are a functional cylinder body comprising magnetic patterns and non-magnetic patterns formed on a circumferential surface and a manufacturing method therefor.

The functional cylinder body comprises: a cylinder body with recesses, which has recess patterns and non-recess patterns formed by forming recesses on a circumferential surface of a cylinder main body, the circumferential surface of the cylinder main body being made of any one of a magnetic material and a non-magnetic material; and functional patterns, which are made of any one of the magnetic material and the non-magnetic material and embedded in the recess patterns, in which magnetic patterns of the magnetic material and non-magnetic patterns of the non-magnetic material are adjacently formed by embedding the non-magnetic material in the recess patterns when the circumferential surface of the cylinder main body is made of the magnetic material and by embedding the magnetic material in the recess patterns when the circumferential surface of the cylinder main body is made of the non-magnetic material.

## Description

### Technical Field

The present invention relates to a functional cylinder body comprising magnetic patterns of a magnetic material and non-magnetic patterns of a non-magnetic material, which are adjacently formed on a circumferential surface, and a manufacturing method therefor.

### Background Art

A gravure plate-making roll has hitherto been known as a cylinder body with recesses. A general manufacturing process of the gravure plate-making roll is described in, for example, the related-art section of Patent Document 1. Specifically, the manufacturing process is a process involving: installation - chromium peeling - correction polishing and plate falling polishing - degreasing - water washing - acid washing - water washing - copper sulfate plating - grinding stone polishing - photosensitive film application formation - image printing with a laser exposure device - development - etching - resist peeling - chromium plating - paper polishing - delivery.

Further, a gravure plate-making roll using a DLC as a surface reinforcing coating layer has also been known from, for example, Patent Document 2.

Further, as a fully automatic manufacturing system of a gravure plate-making roll, there are given systems described in, for example, Patent Documents 3 and 4.

Meanwhile, as cylinders used in various devices, a hydraulic cylinder and a pneumatic cylinder have been known (Patent Documents 5 and 6).

### Prior Art Documents

### Patent Document

Patent Document 1: JP 2004-223751 A
Patent Document 2: JP 2007-130996 A
Patent Document 3: WO 2007/135898 A1
Patent Document 4: WO 2011/125926 A1
Patent Document 5: JP 3088245 U
Patent Document 6: JP Hei 05-1063 U

### Summary of the Invention

### Problems to be solved by the invention

The applicant of the present application has found that a novel functional cylinder body can be obtained by embedding a magnetic material or a non-magnetic material in recesses of a cylinder body with recesses, to thereby achieve the present invention.

That is, an object of the present invention is to provide a functional cylinder body comprising magnetic patterns and non-magnetic patterns formed on a circumferential surface and a manufacturing method therefor.

### Means for Solving Problems

In order to achieve the above-mentioned object, a functional cylinder body according to the present invention comprises: a cylinder body with recesses, which has recess patterns and non-recess patterns formed by forming recesses on a circumferential surface of a cylinder main body, the circumferential surface of the cylinder main body being made of any one of a magnetic material and a non-magnetic material; and functional patterns, which are made of any one of the magnetic material and the non-magnetic material and embedded in the recess patterns, in which magnetic patterns of the magnetic material and non-magnetic patterns of the non-magnetic material are adjacently formed by embedding the non-magnetic material in the recess patterns when the circumferential surface of the cylinder main body is made of the magnetic material and by embedding the magnetic material in the recess patterns when the circumferential surface of the cylinder main body is made of the non-magnetic material.

It is preferred that the functional patterns are formed in a linear shape and formed alternately in a radial direction and/or an axial direction on the circumferential surface of the cylinder body with recesses.

It is preferred that the cylinder body with recesses is manufactured by laser plate making. As the laser plate making technology, for example, technologies disclosed in Patent Documents 1 to 4 are applicable.

It is preferred that the magnetic patterns are made of at least one kind of magnetic material selected from the group consisting of Fe, Ni, and Co. The magnetic patterns may be made of an alloy using the magnetic materials.

It is preferred that the non-magnetic patterns are made of at least one kind of non-magnetic material selected from the group consisting of Cu and Al. The non-magnetic patterns may be made of an alloy using the non-magnetic materials.

It is preferred that the magnetic patterns and the non-magnetic patterns are made of a metal material and formed by metal plating.

It is preferred that the recesses of the cylinder body with recesses have an opening width of from 1 µm to 1,000 µm. Further, the opening width is more preferably from 1 µm to 50 µm, still more preferably from 1 µm to 20 µm.

It is preferred that the recesses of the cylinder body with recesses have a depth of from 1 µm to 1,000 µm. Further, the depth is more preferably from 1 µm to 50 µm, still more preferably from 1 µm to 20 µm.

An apparatus according to the present invention comprises the said functional cylinder body. The apparatus of the present invention encompasses any apparatus capable of comprising the functional cylinder body of the present invention, for example, a hydraulic cylinder or an air cylinder comprising the functional cylinder body of the present invention, a machine tool comprising the hydraulic cylinder or the air cylinder, a robot, a linear sensor, micro electro mechanical systems (MEMS), an aircraft, a satellite, and the like.

It is preferred that the apparatus further comprises magnetic flux detection means arranged in a vicinity of an outer circumferential surface of the functional cylinder body. As the magnetic flux detection means, there is given, for example, a coil formed into an annular shape.

A method of manufacturing a functional cylinder body according to the present invention is a method for manufacturing the said functional cylinder body, and the method comprises: a step of preparing a cylinder main body having a circumferential surface made of any one of a magnetic material and a non-magnetic material; a recess forming step of a cylinder body with recesses, which comprises a step of applying a resist onto the circumferential surface of the cylinder main body and a step of exposing the resist to laser light; and a pattern forming step of adjacently forming magnetic patterns of the magnetic material and non-magnetic patterns of the non-magnetic material by embedding functional patterns made of any one of the magnetic material and the non-magnetic material in the formed recesses of the cylinder body with recesses.

It is preferred that the functional patterns are formed in a linear shape and formed alternately in a radial direction and/or an axial direction on the circumferential surface of the cylinder body with recesses.

It is preferred that the cylinder body with recesses is manufactured by laser plate making. As the laser plate making technology, for example, technologies disclosed in Patent Documents 1 to 4 are applicable.

It is preferred that the magnetic patterns are made of at least one kind of magnetic material selected from the group consisting of Fe, Ni, and Co. The magnetic patterns may be made of an alloy using the magnetic materials.

It is preferred that the non-magnetic patterns are made of at least one kind of non-magnetic material selected from the group consisting of Cu and Al. The non-magnetic patterns may be made of an alloy using the non-magnetic materials.

It is preferred that the magnetic patterns and the non-magnetic patterns are made of a metal material, and that the method further comprises a metal plating step of forming the magnetic patterns and the non-magnetic patterns.

It is preferred that the method of manufacturing a functional cylinder body of the present invention is performed by a fully automatic laser gravure plate-making system. As the fully automatic laser gravure plate-making system, for example, systems disclosed in Patent Documents 3 and 4 are applicable. In particular, the system, in which a plurality of non-travelling industrial robots are installed, and the industrial robots are caused to transfer a plate base material to each other to successively transport the plate base material to a processing unit, to thereby manufacture and process a cylinder body with recesses, as disclosed in Patent Document 4 is suitable from the viewpoint of production efficiency and prevention of dust generation.

### Advantageous Effects of the Invention

The present invention exhibits the remarkable effect capable of providing the functional cylinder body comprising magnetic patterns of a magnetic material and non-magnetic patterns of a non-magnetic material, which are adjacently formed on a circumferential surface, and the manufacturing method therefor.

### Brief Description of Drawings

FIG. 1 is a schematic partial sectional view for illustrating a functional cylinder body according to one embodiment of the present invention.
FIG. 2 is an explanatory view for schematically illustrating a method of manufacturing a functional cylinder body of the present invention. FIG. 2(a) is a schematic main portion sectional view for illustrating a recess forming step of a cylinder body with recesses. FIG. 2(b) is a schematic main portion sectional view for illustrating a pattern forming step. FIG. 2(c) is a schematic main portion sectional view for illustrating a surface hardening coating film forming step.
FIG. 3 is a schematic view for illustrating the functional cylinder body of the present invention. FIG. 3(a) is a schematic view in which functional patterns are formed in a linear shape in a radial direction. FIG. 3(b) is a schematic view in which functional patterns are formed in a linear shape in an axial direction.
FIG. 4 is a schematic view of an apparatus in which magnetic flux detection means is arranged in the vicinity of an outer circumferential surface of the functional cylinder body of the present invention.
FIG. 5 is a magnified photograph of an axial cross-section of a functional cylinder body manufactured in Example 1.
FIG. 6 is a magnified photograph of a circumferential surface of a functional cylinder body manufactured in Example 2.

### Description of Embodiments

Embodiments of the present invention are described below, but those embodiments are described as examples, and hence it is understood that various modifications may be made thereto without departing from the technical spirit of the present invention. In addition, the same members are represented by the same reference symbols.

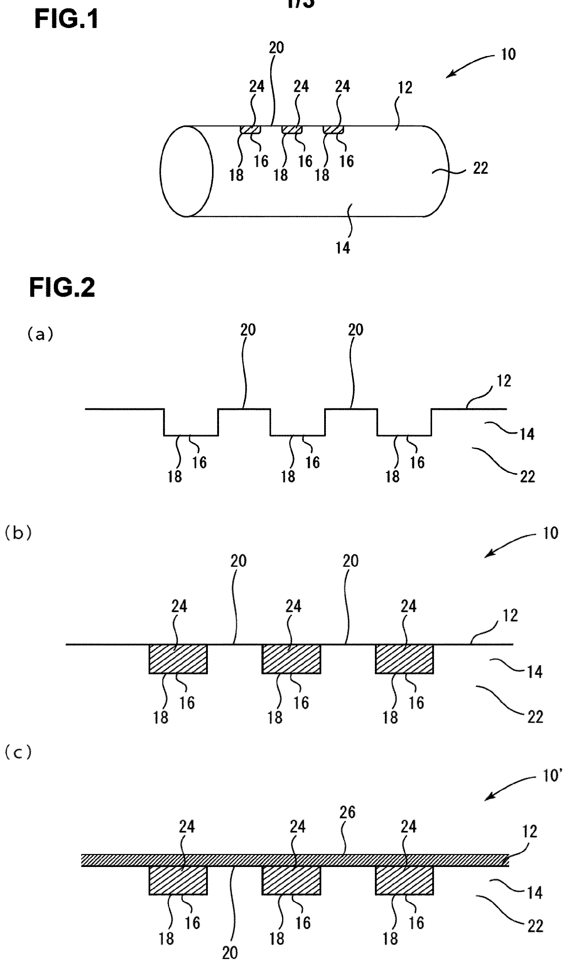

In FIG. 1, reference symbol 10 denotes a functional cylinder body according to one embodiment of the present invention.

In the functional cylinder body 10, recesses 16 are formed on a circumferential surface 12 of a cylinder main body 14, the circumferential surface 12 being made of any one of a magnetic material and a non-magnetic material, and thus, the functional cylinder body 10 comprises a cylinder body 22 with recesses in which recess patterns 18 and non-recess patterns 20 are formed and functional patterns 24 made of any one of a magnetic material and a non-magnetic material embedded in the recess patterns 18. Magnetic patterns of the magnetic material and non-magnetic patterns of the non-magnetic material are adjacently formed by embedding the non-magnetic material in the recess patterns 18 when the circumferential surface 12 of the cylinder main body 14 is made of the magnetic material and by embedding the magnetic material in the recess patterns 18 when the circumferential surface 12 of the cylinder main body 14 is made of the non-magnetic material.

In manufacturing of the functional cylinder body 10, as is well illustrated in FIG. 2, the cylinder main body 14 in which the circumferential surface 12 is made of any one of a magnetic material and a non-magnetic material is first prepared.

Next, a resist is applied onto the circumferential surface 12 of the cylinder main body 14. The resist is exposed to laser light, and further etching is performed, to thereby form the recesses 16. As a method of forming the recesses 16 on the circumferential surface 12 of the cylinder main body 14, for example, methods disclosed in Patent Documents 1 to 4 may be adopted. Thus, the recesses of the cylinder body 22 with recesses are formed (FIG. 2(a)).

Next, the functional patterns 24 made of any one of the magnetic material and the non-magnetic material are embedded in the formed recesses 16 of the cylinder body 22 with recesses, to thereby form patterns so that the magnetic patterns of the magnetic material and the non-magnetic patterns of the non-magnetic material are adjacently arranged (FIG. 2(b)). Thus, the functional cylinder body 10 of the present invention is completed.

In the example of FIG. 2(b), for example, when the circumferential surface 12 of the cylinder main body 14 is made of a non-magnetic material, for example, copper, the resist is applied onto the circumferential surface 12 of the cylinder main body 14, the resist is exposed to laser light, and further the copper is subjected to etching, with the result that the recesses 16 are formed. When the functional patterns 24 made of a magnetic material, for example, nickel, are embedded in the recesses 16, magnetic patterns embedded in the recess patterns 18 and the non-recess patterns 20 made of the non-magnetic material are adjacently arranged. In the present invention, the functional patterns embedded in the recess patterns 18 encompass both the patterns made of the magnetic material and the patterns made of the non-magnetic material.

When further strength is required, a surface hardening coating film 26 may be formed through use of a known surface hardening coating film material, for example, chromium or DLC, on the surface of the functional cylinder body 10, to thereby form a functional cylinder body 10' as illustrated in FIG. 2(c).

In the illustrated example, a solid roll is used as an example of the cylinder main body 14, but a hollow roll may be used. There is no particular limitation on the material for the cylinder main body 14, but it is required that the circumferential surface thereof is made of any one of a magnetic material or a non-magnetic material.

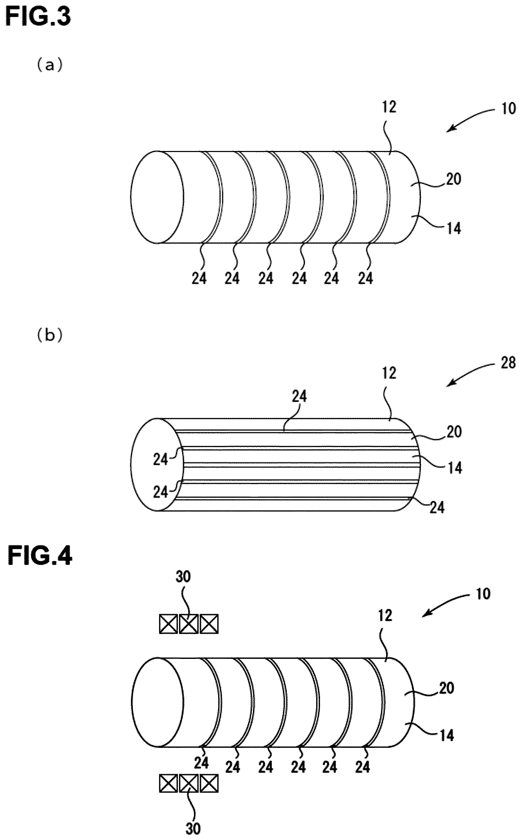

Further, in the example of FIG. 1, the functional patterns are formed in a linear shape in the radial direction as illustrated in FIG. 3(a), but a functional cylinder 28 in which the functional patterns are formed in a linear shape in an axial direction as illustrated in FIG. 3(b) may be used.

Next, a schematic view of an apparatus in which magnetic flux detection means 30 is arranged in the vicinity of the outer circumferential surface of the functional cylinder body 10 of the present invention is illustrated in FIG. 4. In FIG. 4, an example using a magnetic flux detection coil as the magnetic flux detection means 30 is illustrated. With this, when the functional cylinder body 10 of the present invention is used in, for example, a piston rod of a hydraulic cylinder or an air cylinder, the position of the piston rod can be accurately detected, and hence the accurate position detection and control can be performed. Further, the functional patterns may be produced with various widths of, for example, from about 1 µm to about 1,000 µm, and hence the apparatus is also applicable to a fine product such as a MEMS.

### Examples

Now, the present invention is more specifically described by way of Examples, but it is needless to say that Examples are only illustrative and should not be interpreted as limiting the present invention.

### (Example 1)

A hollow roll made of aluminum having a circumference of 600 mm, a surface length of 1,100 mm, and a thickness of 10 mm was prepared as a cylinder main body, and a functional cylinder body was manufactured through use of NewFX (fully automatic laser plate-making system manufactured by Think Laboratory Co., Ltd.). First, the hollow roll serving as a roll to be processed was mounted onto a copper plating bath and completely immersed in a plating solution, to thereby form a copper-plated layer of 80 µm at 30 A/dm² and 6.0 V. No nodules and pits were generated on the plated surface, and a uniform copper-plated layer serving as a base material was obtained. The surface of the copper-plated layer was polished through use of a two-head polishing machine (polishing machine manufactured by Think Laboratory Co., Ltd.), to thereby form a uniform polished surface as the surface of the copper-plated layer.

Next, a photosensitive film (thermal resist: TSER2104 E4 (manufactured by Think Laboratory Co., Ltd.)) was applied (with a fountain coater) onto the surface of the formed copper-plated layer and dried. The thickness of the obtained photosensitive film was measured with a thickness meter (F20 manufactured by Filmetrics, Inc. and sold by Matsushita Techno Trading Co., Ltd.) to be 4 µm. Then, an image was developed by laser exposure. The laser exposure was performed with a predetermined pattern under an exposure condition of 500 mJ/cm² through use of Laser Stream FX. Further, the development was performed through use of a TLD developing solution (developing solution manufactured by Think Laboratory Co., Ltd.) with a developing solution dilution ratio (undiluted solution : water = 1 : 7) at 24°C for 90 seconds, to thereby form a predetermined resist pattern. Then, the copper-plated layer was corroded through use of the resist pattern thus formed as an etching mask. The corrosion was performed by spraying a copper(II) chloride solution serving as a corrosive liquid onto the copper-plated layer at 35°C for 100 seconds. Then, the resist of the resist pattern was peeled through use of sodium hydroxide with a dilution ratio of 20 g/L at 40°C for 180 seconds.

The recesses were formed on the circumferential surface as described above, and thus a cylinder body with recesses in which recess patterns and non-recess patterns were formed was obtained. The opening width of the recess was 40 µm, and the depth thereof was 20 µm.

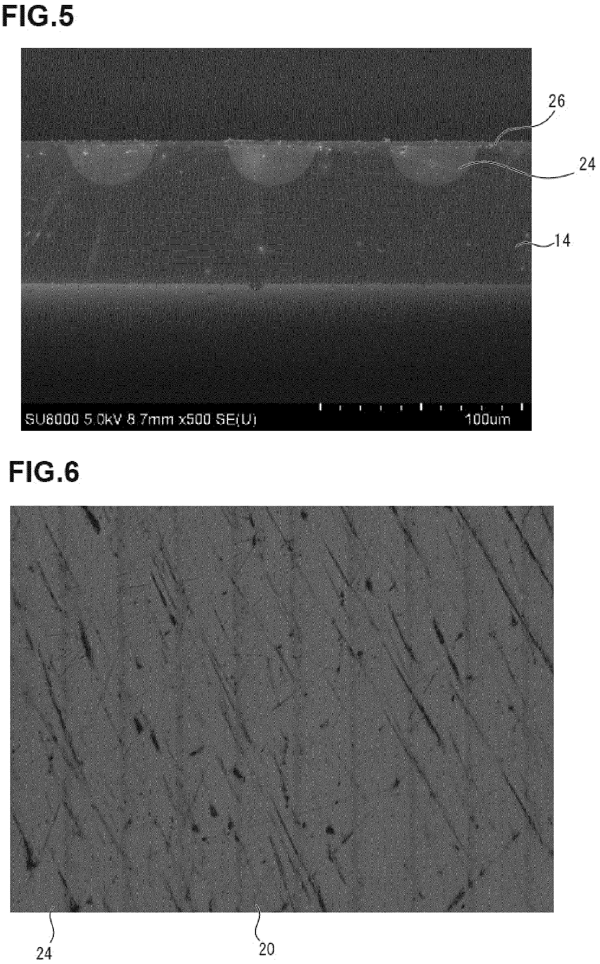

The cylinder body with recesses thus obtained was mounted onto a nickel plating bath and completely immersed in a plating solution, to thereby subject the recess patterns to nickel plating of 20 µm at 2 A/dm² and 6.0 V to embed functional patterns in the recesses. The surfaces of the non-recess patterns were also subjected to nickel plating but were polished through use of a two-head polishing machine (polishing machine manufactured by Think Laboratory Co., Ltd.), to thereby expose the surfaces of the non-recess patterns. Further, the resultant was subjected to chromium plating of 5 µm, to thereby provide a functional cylinder body. A magnified photograph of an axial cross-section of the obtained functional cylinder body is shown in FIG. 5.

### (Example 2)

A hollow roll made of iron having a circumference of 600 mm, a surface length of 1,100 mm, and a thickness of 8 mm was prepared as a cylinder main body, and a functional cylinder body was manufactured through use of NewFX (fully automatic laser plate-making system manufactured by Think Laboratory Co., Ltd.). First, a photosensitive film (thermal resist: TSER2104 E4 (manufactured by Think Laboratory Co., Ltd.)) was applied (with a fountain coater) onto the surface of an iron layer of the hollow roll serving as a roll to be processed and dried. The thickness of the obtained photosensitive film was measured with a thickness meter (F20 manufactured by Filmetrics, Inc. and sold by Matsushita Techno Trading Co., Ltd.) to be 4 µm. Then, an image was developed by laser exposure. The laser exposure was performed with a predetermined pattern under an exposure condition of 500 mJ/cm² through use of Laser Stream FX. Further, the development was performed through use of a TLD developing solution (developing solution manufactured by Think Laboratory Co., Ltd.) with a developing solution dilution ratio (undiluted solution : water = 1 : 7) at 24°C for 90 seconds, to thereby form a predetermined resist pattern. Then, the iron layer was corroded through use of the resist pattern thus formed as an etching mask. The corrosion was performed by spraying an iron chloride solution serving as a corrosive liquid onto the iron layer at 35°C for 100 seconds. Then, the resist of the resist pattern was peeled through use of sodium hydroxide with a dilution ratio of 20 g/L at 40°C for 180 seconds.

The recesses were formed on the circumferential surface as described above, and thus a cylinder body with recesses in which recess patterns and non-recess patterns were formed was obtained. The opening width of the recess was 20 µm, and the depth thereof was 10 µm.

The cylinder body with recesses thus obtained was mounted onto a copper plating bath and completely immersed in a plating solution, to thereby subject the recess patterns to copper plating of 10 µm at 10 A/dm² and 6.0 V to embed functional patterns in the recesses. The surfaces of the non-recess patterns were also subjected to copper plating but were polished through use of a two-head polishing machine (polishing machine manufactured by Think Laboratory Co., Ltd.), to thereby expose the surfaces of the non-recess patterns. A magnified photograph of a circumferential surface of the obtained functional cylinder body is shown in FIG. 6.

### Reference Signs List

10, 10', 28: functional cylinder body, 12: circumferential surface, 14: cylinder main body, 16: recess, 18: recess pattern, 20: non-recess pattern, 22: cylinder body with recesses, 24: functional pattern, 26: surface hardening coating film, 30: magnetic flux detection means.

## Claims

1. A functional cylinder body, comprising:
a cylinder body with recesses, which has recess patterns and non-recess patterns formed by forming recesses on a circumferential surface of a cylinder main body, the circumferential surface of the cylinder main body being made of any one of a magnetic material and a non-magnetic material; and
functional patterns, which are made of any one of the magnetic material and the non-magnetic material and embedded in the recess patterns,
wherein magnetic patterns of the magnetic material and non-magnetic patterns of the non-magnetic material are adjacently formed by embedding the non-magnetic material in the recess patterns when the circumferential surface of the cylinder main body is made of the magnetic material and by embedding the magnetic material in the recess patterns when the circumferential surface of the cylinder main body is made of the non-magnetic material.

2. A functional cylinder body according to claim 1, wherein the functional patterns are formed in a linear shape and formed alternately in a radial direction and/or an axial direction on the circumferential surface of the cylinder body with recesses.

3. A functional cylinder body according to claim 1 or 2, wherein the cylinder body with recesses is manufactured by laser plate making.

4. A functional cylinder body according to any one of claims 1 to 3, wherein the magnetic patterns are made of at least one kind of magnetic material selected from the group consisting of Fe, Ni, and Co.

5. A functional cylinder body according to any one of claims 1 to 4, wherein the non-magnetic patterns are made of at least one kind of non-magnetic material selected from the group consisting of Cu and Al.

6. A functional cylinder body according to any one of claims 1 to 5, wherein the magnetic patterns and the non-magnetic patterns are made of a metal material and formed by metal plating.

7. A functional cylinder body according to any one of claims 1 to 6, wherein the recesses of the cylinder body with recesses have an opening width of from 1 µm to 1,000 µm.

8. A functional cylinder body according to any one of claims 1 to 7, wherein the recesses of the cylinder body with recesses have a depth of from 1 µm to 1,000 µm.

9. An apparatus, comprising the functional cylinder body of any one of claims 1 to 8.

10. An apparatus according to claim 9, further comprising magnetic flux detection means arranged in a vicinity of an outer circumferential surface of the functional cylinder body.

11. A method of manufacturing a functional cylinder body for manufacturing the functional cylinder body of any one of claims 1 to 8,
the method comprising:
a step of preparing a cylinder main body having a circumferential surface made of any one of a magnetic material and a non-magnetic material;
a recess forming step of a cylinder body with recesses, which comprises a step of applying a resist onto the circumferential surface of the cylinder main body and a step of exposing the resist to laser light; and
a pattern forming step of adjacently forming magnetic patterns of the magnetic material and non-magnetic patterns of the non-magnetic material by embedding functional patterns made of any one of the magnetic material and the non-magnetic material in the formed recesses of the cylinder body with recesses.

12. A method of manufacturing a functional cylinder body according to claim 11, wherein the pattern forming step is performed so that the magnetic patterns and the non-magnetic patterns are formed in a linear shape and formed alternately in a radial direction and/or an axial direction on the circumferential surface of the cylinder body with recesses.

13. A method of manufacturing a functional cylinder body according to claim 11 or 12, wherein the cylinder body with recesses is manufactured by laser plate making.

14. A method of manufacturing a functional cylinder body according to any one of claims 11 to 13, wherein the magnetic patterns are made of at least one kind of magnetic material selected from the group consisting of Fe, Ni, and Co.

15. A method of manufacturing a functional cylinder body according to any one of claims 11 to 14, wherein the non-magnetic patterns are made of at least one kind of non-magnetic material selected from the group consisting of Cu and Al.

16. A method of manufacturing a functional cylinder body according to any one of claims 11 to 15,
wherein the magnetic patterns and the non-magnetic patterns are made of a metal material, and
wherein the method further comprises a metal plating step of forming the magnetic patterns and the non-magnetic patterns.

17. A method of manufacturing a functional cylinder body according to any one of claims 11 to 16, wherein the method of manufacturing a functional cylinder body is performed by a fully automatic laser gravure plate-making system.
